# EUROPÄISCHE PATENTSCHRIFT

(11) **EP 0 838 821 B1**
(45) Veröffentlichungstag und Bekanntmachung des Hinweises auf die Patenterteilung: **02.05.2002**
(21) Anmeldenummer: 96117206.1
(22) Anmeldetag: 26.10.1996
(51) Int. Cl.: G11B 33/04

(54) **Verpackung zur Aufnahme einer scheibenförmigen Informationsplatte**
Package for holding a disc-like information carrier
Emballage contenant un support d'information en forme de disque

(43) Veröffentlichungstag der Anmeldung: 29.04.1998
(73) Patentinhaber: CARTONNERIES DE THULIN S.A., B-7350 Thulin (BE)
(72) Erfinder: Lammerant, Henri, 7350 Thulin (BE); Lammerant, Filip, 7350 Thulin (BE)
(74) Vertreter: Stenger, Watzke & Ring Patentanwälte

(56) Entgegenhaltungen:
- EP-A- 0 159 860
- EP-A- 0 414 306
- EP-A- 0 559 273
- EP-A- 0 568 298
- DE-A- 4 218 437
- US-A- 5 310 053
- US-A- 5 385 231

## Beschreibung

Die Erfindung betrifft eine Verpackung zur Aufnahme einer scheibenförmigen Informationsplatte, insbesondere einer Compact Disc, mit einem als Kunststoffspritzteil gefertigten Plattenhalter, der mit einer Einsenkung versehen ist, in die sich die Informationsplatte von oben her einsetzen läßt, ferner mit an dem Plattenhalter angeformten Halteelementen für die in die Einsenkung eingesetzte Informationsplatte, sowie ferner mit einer im wesentlichen rechteckigen Abdeckung für den Plattenhalter, die entlang eines ihrer Ränder an dem Plattenhalter befestigt ist, während der gegenüberliegende freie Rand der Abdeckung mittels eines Verschlußteils lösbar an dem Plattenhalter festlegbar ist.

Ein solche Verpackung ist, gemäß des Oberbegiffs des Anspruchs 1, in EP-0 414 306 A offenbart.

Derartige Verpackungen sind in den unterschiedlichsten Ausführungen bekannt und finden ihre weiteste Verbreitung bisher in der Aufbewahrung von Compact Discs im Audiobereich.

Eine gattungsmäßige Verpackung hierzu stellt z. B. die weltweit führende, sogenannte "Jewel Box" dar, die aus aus durchsichtigem Kunststoff gefertigten Boden- und Deckenteilen sowie einem dazwischenliegenden Plattenhalter zusammengesetzt ist. Boden- und Deckelteil sind konstruktiv so ausgebildet, daß papierene Informationsschriften, Booklets oder ähnliches manuell oder maschinell eingelegt werden können. Ein zweimaliges Abknicken dieser Informationsschriften an gegenüberliegenden Kanten der Stirnseite der Verpackung bietet zudem den Vorteil, daß die abgeknickten Bereiche ähnlich zu Buchrükken beschriftbar sind. Boden- und Deckelteil sind an einer gemeinsamen Kante durch eine Scharniervorrichtung schwenkbar miteinander verbunden und lassen sich somit buchartig aufklappen. Der Plattenhalter, auch "Tray" genannt, wird in entsprechenden Maschinen automatisch mit einer CD bestückt und anschließend in das Bodenteil mit Klemmsitz eingesetzt. An dem Plattenhalter sind Klemmelemente ausgebildet, die in das Mittelloch einer CD-Platte eingreifen und diese dadurch arretieren.

Da Compact Discs jedoch zunehmende Bedeutung als Datenträger im EDV-Bereich, sogenannte CD-ROMs, gewinnen und demnach immer öfter auch als Beilage von Computerzeitschriften Anwendung finden, wird eine Verpackung benötigt, die dem Erfordernis einer flachen und leichtgewichtigen aber dennoch verwindungssteifen und ausreichend Schutz gegenüber Umwelteinflüssen bietenden Gestaltung Rechnung trägt.

Im Hinblick auf diese Eigenschaften weist die obige bekannte CD-Verpackung jedoch sowohl herstellungstechnische als auch anwendungsbezogene Nachteile auf. So kann der Plattenhalter aufgrund der noch dazwischen einzulegenden Informationsschrift nicht bereits während der Fertigung in das Bodenteil eingesetzt werden, so daß eine kostenaufwendige, getrennte Handhabung von Deckel- und Bodenteil, Plattenhalter und Textbeilagen erforderlich ist. Außerdem sind derartige Verpackungen aufgrund der konstruktiv kaum zu unterbietenden Dicke von wenigstens 8 mm relativ voluminös und schwer.

Ferner ist eine Verpackung bekannt, die aus einer in drei Felder unterteilten Kartonage besteht, an der mittig ein aus Kunststoff gepreßter, rechteckiger Plattenhalter bekannter Art aufgeklebt ist. Die beiden äußeren Drittel der Kartonage lassen sich flügelartig nach innen klappen und bilden dann überlappend aufeinanderliegend die Abdeckung für die Oberseite des Plattenhalters. Vorund Rückseite dieser Verpackung sind bis auf die mit dem Plattenhalter beklebte Fläche mit Textinformationen bedruckbar. Zusätzlich können auch noch auf den Innenflächen der Flügel nach außen hin aufklappbare Textbeilagen oder Booklets angebracht werden. Als nachteilig erweist sich bei dieser bekannten Verpackung das Fehlen einer arretierbaren Verschlußmöglichkeit der Abdeckung, so daß diese sich von selbst öffnen kann. Um eine ausreichende Verwindungssteifigkeit zu erlangen, bilden die beiden Flügel im geschlossenen Zustand einen Doppeldeckel, mit der Folge, daß die bekannte Verpackung in den äußeren Abmessungen letztlich der "Jewel Box" entspricht und demnach auch relativ voluminös und schwer ist.

Bei einer weiteren bekannten Verpackung ist ein aus Kunststoff spritzgegossener, rechteckiger Plattenhalter auf eine Fläche einer faltbaren, den Plattenhalter im geschlossenen Zustand umhüllenden Kartonage geklebt. Mittels eines mit dem Plattenhalter über ein Scharnier verbundenen, die Abdeckung umgreifenden Verschlußteils ist der freie Rand der Abdeckung an dem Plattenhalter fixierbar. Diese Verpackung kann im Prinzip zwar einfach und kostengünstig hergestellt werden und bietet aufgrund der Arretierbarkeit der Abdeckung mittels eines Verschlußteils auch einen guten Schutz gegen Umwelteinflüsse, sie ist jedoch aufgrund ihrer äußeren Abmessungen und der aus Stabilitätsgründen bedingten Verwendung von festem Kartonmaterial relativ voluminös und schwer.

Der Erfindung liegt daher die **Aufgabe** zugrunde, eine Verpackung zur Aufnahme einer scheibenförmigen Informationsplatte, insbesondere einer Compact Disc, derart weiterzubilden, daß sie einfacher, schneller und kostengünstiger zu fertigen ist und sie sich zugleich durch eine besonders flache und leichtgewichtige Gestaltung gegenüber den bekannten Verpackungen auszeichnet.

Diese Aufgabe ist bei einer Verpackung der eingangs genannten Art erfindungs gemäß gelöst durch die kennzeichen den Merkmale von Anspruch 1.

Durch eine solche Verpackung wird im geschlossenen Zustand auf eine einfache Weise eine formschlüssige Befestigung der Abdeckung an dem Plattenhalter erreicht, die eine besonders flache und leichtgewichtige Gestaltung gewährleistet.

Bei einer weiteren vorteilhaften Ausgestaltung der Erfindung ist das Verschlußteil ein Kunststoffstreifen, der auf der gesamten Länge des freien Randes mit diesem verbunden ist. Durch diese Ausgestaltung erhält die Abdeckung eine erhöhte Festigkeit und Stabilität, und sie wird beim Schließen der Verpackung gleichmäßig gestrafft.

Vorzugsweise ist das Verschlußteil mit der Abdeckung verklebt, da dies eine einfache und kostengünstige Fertigungsmethode darstellt.

Grundsätzlich kann die Abdeckung aus allen geeigneten Materialien bestehen, zum Beispiel aus flexibler Kunststoff-Folie. Als besonders geeignet wird jedoch eine Abdeckung aus Papier oder Pappe vorgeschlagen, die eine preiswerte und leichtgewichtige Gestaltung der Verpackung ermöglicht. Darüber hinaus beinhaltet Papier den Vorteil, daß die Hülle mit Informationen bedruckbar ist und somit keine Herstellungskosten für das Einlegen von Textbeilagen entstehen.

In einer bevorzugten Ausführungsform ist die Abdeckung mit der Unterseite des Plattenhalters und zusätzlich mit einer nach oben weisenden und sich entlang des Randes erstreckenden, streifenförmigen Fläche des Plattenhalters verklebt. Auf diese Weise wird ein fester, rutschfreier Sitz der Abdeckung gewährleistet. Zudem bedingt die nach oben weisende, streifenförmige Klebefläche, daß eine gleichmäßige Faltkante auf der Oberseite des Plattenhalters entsteht, die ein sicheres Öffnen und Schließen der Abdeckung ermöglicht.

Um zu erreichen, daß die Verpackung sehr flach ist und somit sich als Beilage zu Zeitschriften besonders gut eignet, beträgt vorteilhafterweise die zwischen Ober- und Unterseite des Plattenhalters gemessene Dicke 2 mm bis 4 mm.

Mit der Erfindung wird weiterhin vorgeschlagen, daß Plattenhalter und Verschlußteil als Bestandteile ein- und desselben Kunststoffspritzteils über mindestens eine Sollbruchstelle in Materialverbindung stehen. Auf diese Weise läßt sich die Verpackung aus nur einem einzigen Kunststoffteil fertigen, so daß sich eine sehr einfache und kostengünstige Herstellung ergibt.

Gemäß einer weiteren bevorzugten Ausführungsform der Erfindung wird vorgeschlagen, daß sich die Sollbruchstelle nur über einen mittleren Abschnitt des langgestreckt geformten Verschlußteils erstreckt, und daß sich an diesen mittleren Abschnitt des Verschlußteils zu beiden Enden hin Befestigungsabschnitte anschließen, die mit entsprechend geformten Schnapp- oder Rastelementen an dem Plattenhalter zusammenwirken, um das Verschlußteil an dem Plattenhalter festzulegen. Dadurch wird erreicht, daß das Verschlußteil im geschlossenen Zustand in Doppelfunktion als Schnapp- und Klemmverschluß fungiert.

Zum Zwecke der Versiegelung der Verpackung wird vorgeschlagen, daß mehrere in einer Reihe angeordnete, punktförmige Materialverbindungen als Sollbruchstellen dienen. Auf diese Weise wird neben einem einfachen Abbrechen des Verschlußteils ein anschließendes Klemmen durch die abgebrochenen Stege erzielt. Sind Plattenhalter und Verschlußteil bis zum Zeitpunkt des gewollten Brechens der Sollbruchstelle zugleich über die Sollbruchstelle in Materialverbindung, wie auch über Schnapp- oder Rastelemente in formschlüssiger Verbindung, so ist es nicht möglich, die Verpackung nach dem erstmaligen Öffnen wieder in den Urzustand zu versetzen. Damit ist ein herstellungsbedingter, immanenter Versiegelungsschutz der Informationsplatte gegeben, der auch den Diebstahl aus der geschlossenen Verpackung erschwert.

Zweckmäßigerweise erfolgt das Brechen der Sollbruchstelle durch Biegen des Verschlußteils relativ zum Plattenhalter, so daß zugleich ein erhöhter Herausfallschutz beim Öffnen der Verpackung gewährleistet ist.

Um eine platzsparende und einfache Stapelfähigkeit mehrerer Verpackungen zu erlangen, wird ferner vorgeschlagen, daß die Unterseite des Plattenhalter eine plane, ebene Fläche ist.

Schließlich wird vorgeschlagen, daß an der Unterseite des Plattenhalters sich seitliche Führungsfugen befinden, damit eine gezielte und rutschfreie Stapelung erfolgen kann.

Weitere Einzelheiten und Vorteile des Gegenstandes der Erfindung werden nachfolgend anhand der in den Zeichnungen dargestellten Ausführungsbeispiele näher erläutert. Darin zeigen:
- Fig. 1: eine Gesamtansicht der geöffneten Verpackung von der Seite;
- Fig. 2: eine Draufsicht auf den Plattenhalter mit hochgestelltem Verschlußteil;
- Fig. 3: eine Seitenansicht des Plattenhalters gemäß Fig. 2;
- Fig. 4: eine Vorderansicht des Plattenhalters gemäß Fig. 2;
- Fig. 5: eine Draufsicht auf die Halteelemente für die Befestigung der Informationsplatte;
- Fig. 5a: einen Schnitt durch die Halteelemente in Ebene Va-Va der Fig. 5;
- Fig. 6: in einer Draufsicht eine weitere Ausführungsform des Plattenhalters;
- Fig. 7: eine Schnittdarstellung durch den Plattenhalter gemäß Fig. 2;
- Fig. 7a: einen vergrößerten Ausschnitt des in Fig. 7 mit Vlla bezeichneten Bereiches;
- Fig. 8: in einer Ansicht eine Detaildarstellung des in Fig. 3 mit VIII bezeichneten Schnapp- und Klemmverschlusses;
- Fig. 9: eine der Ansicht gemäß Fig. 3 entsprechende Schnittdarstellung;
- Fig. 10: eine Seitenansicht des Plattenhalters gemäß Fig. 2 bei umgelegtem Verschlußteil;
- Fig. 10a: einen vergrößerten Ausschnitt des in Fig. 10 mit Xa bezeichneten Bereiches;
- Fig. 11: in einer Ansicht von unten die untere Klebefläche des Plattenhalters;
- Fig. 12: eine alternative Ausgestaltung der unteren Klebefläche und
- Fig. 13: in einer Draufsicht die oberen Klebeflächen des Plattenhalters und des Verschlußteils.

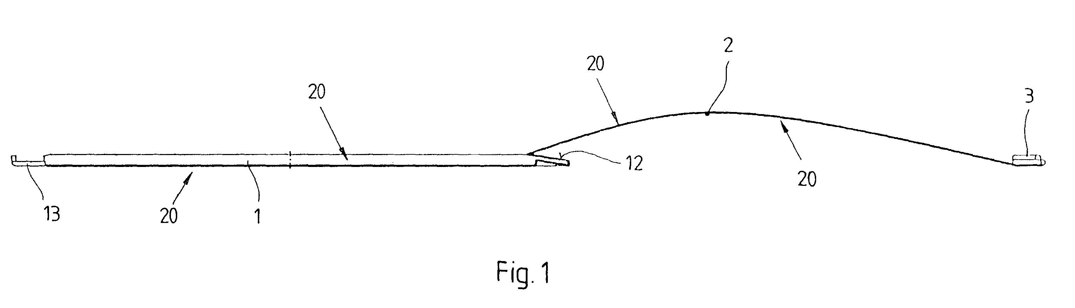

Die erfindungsgemäße Verpackung nach Fig. 1 besteht aus einem flachen, 2 bis 4 mm Dicke aufweisenden Plattenhalter 1, einer diesen umhüllenden Abdeckung 2 sowie einem Verschlußteil 3, wobei die Abdeckung 2 vorzugsweise aus Papier oder Pappe besteht. Der Plattenhalter 1 sowie das Verschlußteil 3 sind aus üblicherweise durchsichtigem oder gefärbtem Kunststoff durch Spritzgießen einstückig hergestellt, d. h. bis zum erstmaligen Öffnen der Verpackung durch den Benutzer Bestandteile ein- und desselben Kunststoffspritzteils.

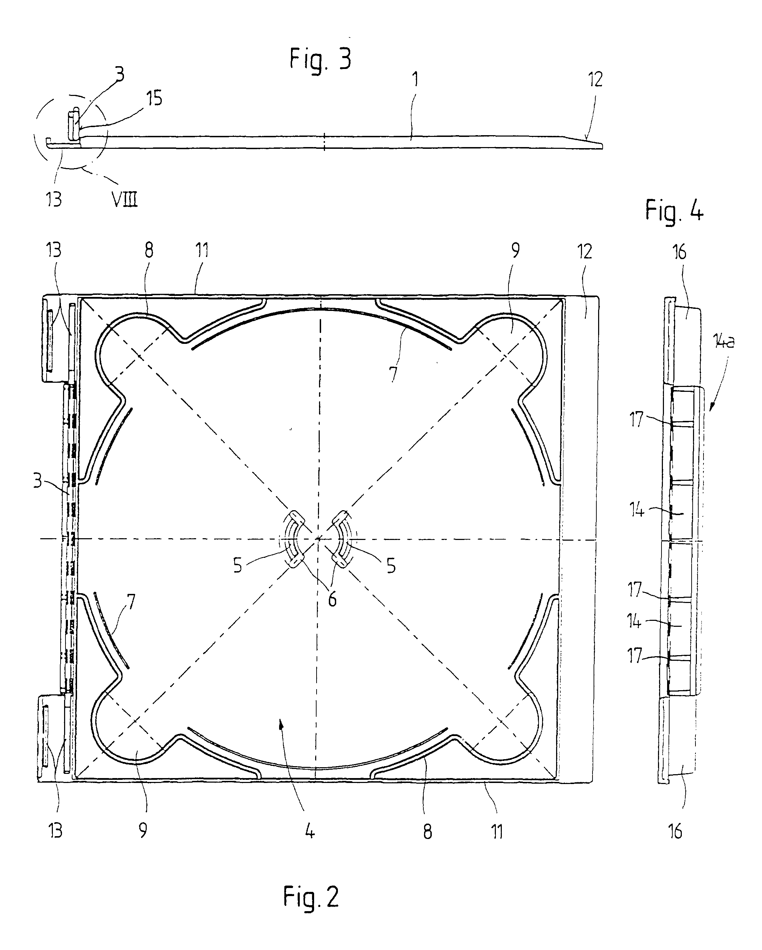

Wie Fig. 2 erkennen läßt, weist der Plattenhalter 1 eine im Grundriß annähernd rechteckige Form auf, in deren Oberseite eine in etwa quadratische Einsenkung 4 eingearbeitet ist, in die sich beispielsweise eine Compact Disc (CD) oder eine andere Informationsplatte einsetzen läßt.

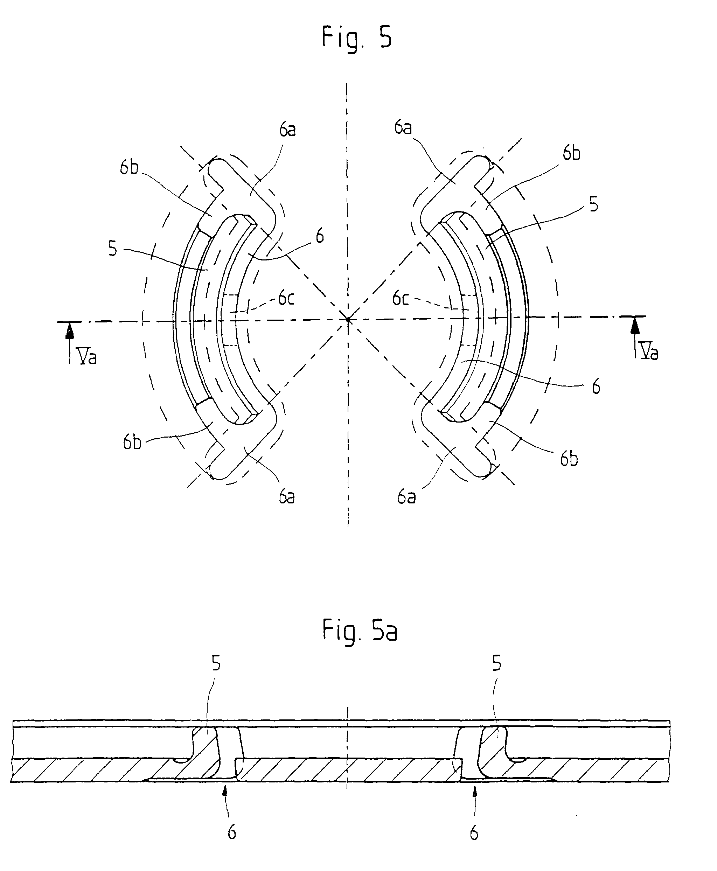

Gemäß Figuren 5 und 5a sind im zentralen Bereich federnde, mit leichtem Übermaß ausgestattete Halteelemente 5 angeformt, so daß die üblicherweise mit einem zentralen Loch versehene CD mit leichtem Druck über die Halteelemente schiebbar ist, um dann in dieser Position klemmend zentriert zu werden. Die Halteelemente 5 bestehen aus zwei sich gegenüberliegenden, teilkreisförmigen Klemmringen, die auf ihren inwärts gerichteten Seiten jeweils von einem den Plattenhalter durchdringenden und dadurch eine federnde Wirkung erzeugenden Schlitz 6 umrandet sind. Der Schlitz 6 hat an beiden Enden einen kurzen, radial verlaufenden Abschnitt 6a, von dem aus wiederum Hinterschnitte 6b, die ebenfalls den Plattenhalter durchdringen, die Halteelemente 5 an deren Außenseite teilkreisförmig umschließen. Hierdurch wird die Haltewirkung der Halteelemente 5 verbessert. Ein in Fig. 5 gestrichelt eingezeichneter, den Schlitz 6 unterbrechender Steg 6c kann zu einer weiteren Verbesserung der Haltekraft auf die CD führen. Die Halteelemente 5 sind so flach gestaltet, daß ihre obere Kante nicht über die Höhe der übrigen Bereiche des 2 mm bis 4 mm dicken Plattenhalters 1 hinausragt.

Der Fig. 2 ist weiterhin zu entnehmen, daß konzentrisch zum Mittelloch der CD angeordnete Rippen 7 die eingelegte CD von unten an ihrem äußersten, nicht beschichteten Randbereich stützen und somit einen Schutz gegen Zerkratzen bilden.

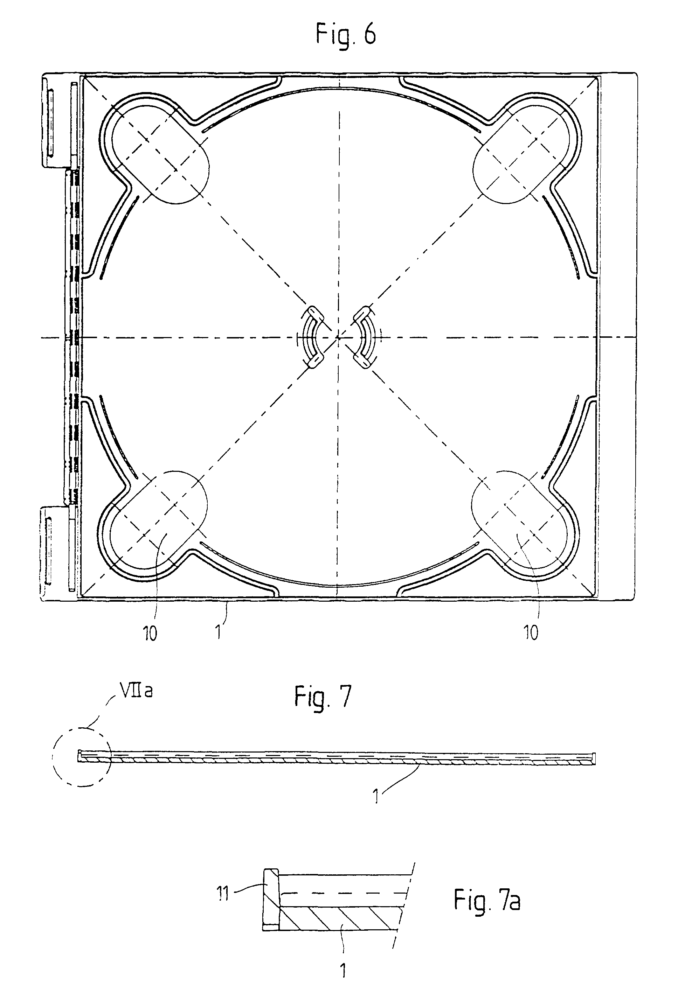

Innerhalb der Einsenkung 4 erhebt sich außerdem eine die Informationsplatte schützend umgebende Versteifungsrippe 8, die in den Eckbereichen der Einsenkung 4 durch annähernd halbkreisförmige Ausbuchtungen 9 erweitert ist, so daß durch ein Untergreifen mit einem Fingernagel, ein einfaches und gezieltes Abheben der Compact Disc vom Plattenhalter 1 ermöglicht wird. Eine alternative Ausführungsform, bei der die Ausbuchtungen 9 zu ellipsenförmigen, von einer eingelegten CD teilweise überdeckten, Grifflöchern 10 geformt sind, ist in Fig. 6 dargestellt.

Entlang zweier einander abgewandter Seitenränder ist der Plattenhalter 1 mit einem hochstehenden, die übrigen Konstruktionselemente in ihrer Höhe etwas überragenden Abschlußrand 11 versehen (siehe Fig. 7 und 7a), der in eine nach außen hin schräg abfallende, den rückseitigen Rand des Plattenhalters 1 bildende, streifenförmige Fläche 12 mündet. Über dieselbe Länge und Breite sind auf der Unterseite des Plattenhalters 1 komplementäre Führungsfugen ausgebildet (nicht dargestellt), in die beim Stapeln mehrerer Plattenhalter der hochstehende Rand 11 eingreift, wodurch eine gezielte und rutschfreie Stapelung gewährleistet wird. Zur Erzielung einer einfachen und automatisierbaren Handhabung der gestapelten Verpackungen ist ferner die Unterseite der streifenförmigen Fläche 12 bezüglich der restlichen planen Unterseite des Plattenhalters 1 etwas nach innen versetzt (nicht dargestellt), so daß zwischen übereinanderliegenden Verpackungen Aussparungen entstehen, die ein frontales Erfassen mit entsprechenden Greifwerkzeugen ermöglichen.

Der der streifenförmigen Fläche 12 gegenüberliegende Rand des Plattenhaltes 1 wird durch nach oben geöffnete, hakenförmige Schnapp- oder Rastelemente 13 gebildet, die mit entsprechenden Befestigungsabschnitten des Verschlußteils 3 zusammenwirken, um das Verschließen der Verpackung zu ermöglichen.

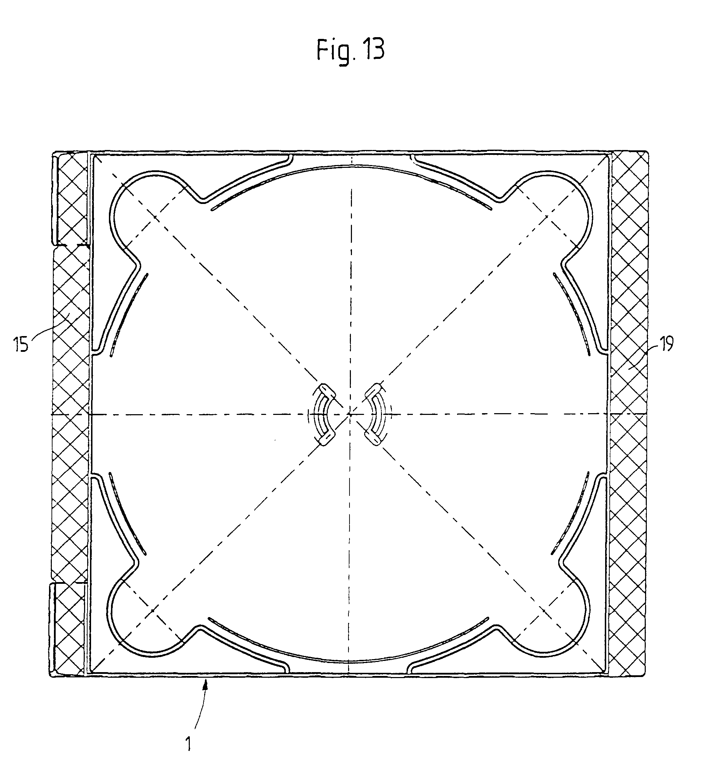

Einzelheiten des Verschlußteils 3 werden nachfolgend anhand der Figuren 4 und 13 erläutert. Das Verschlußteil 3 besteht aus einem im wesentlichen rechteckigen, über die gesamte Breite des Plattenhalters 1 sich erstreckenden Kunststoffstreifen, dessen Oberseite eine plane Klebfläche 15 bildet (siehe Fig. 13 und dessen Unterseite 14a in einem mittleren Abschnitt mit fingerbreiten, etwas erhöhten Griffelementen 14 versehen ist, an deren Enden sich zu den Schnapp- oder Rastelementen des Plattenhalters 1 korrespondierende Befestigungsabschnitte 16 anschließen (siehe Fig. 4). Die Griffelemente 14 dienen außer zu einer besseren ergonomischen Handhabung des Verschlußteils auch zur Verstrebung des flachen Kunststoffstreifens, so daß ein exaktes und verwindungsarmes Öffnen der Verpackung erreicht wird.

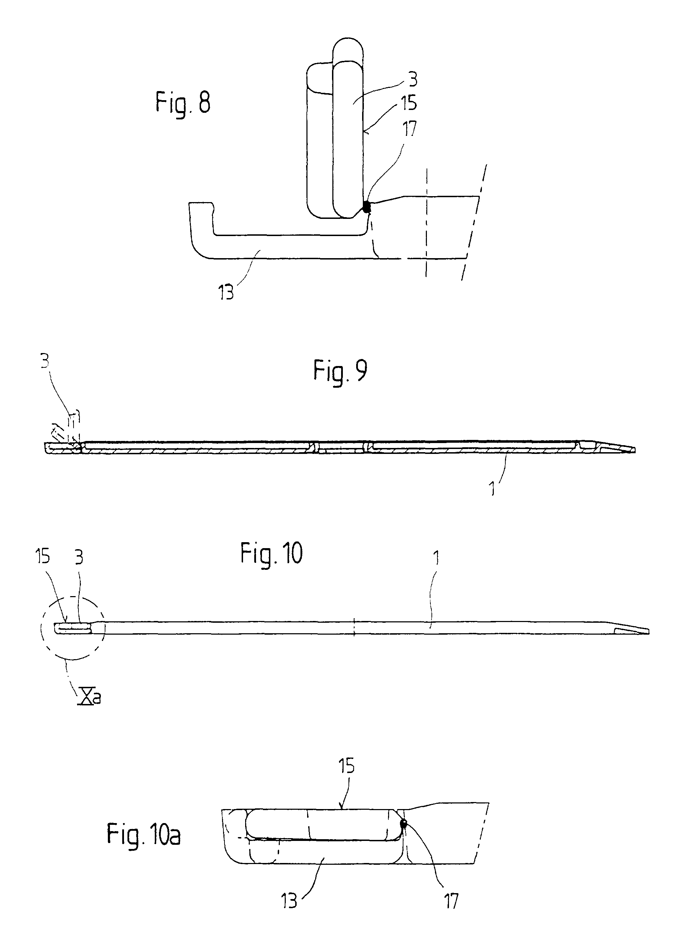

Nach dem Spritzgießen in einem gemeinsamen Spritzwerkzeug sind Plattenhalter 1 und Verschlußteil 3 über mehrere in einer Reihe zwischen den Schnappund Rastelementen 13 bzw. den Befestigungsabschnitten 16 angeordnete, punktförmige Materialverbindungen 17 miteinander verbunden, was die Figuren 3 und 8 erkennen lassen. Das Verschlußteil 3 befindet sich dabei in senkrechter Ausrichtung zum Plattenhalter 1. Bei dem so hergestellten Spritzgießteil wird anschließend das Verschlußteil 3 um die jetzt als Scharniere wirkenden Materialverbindungen 17 umgelegt, bis die beiden Befestigungsabschnitte 16 in die Schnapp- oder Rastelemente eingreifen. Zu diesem Zeitpunkt sind die als Sollbruchstellen dienenden Materialverbindungen 17 noch intakt, so daß zwischen Plattenhalter 1 und Verschlußteil 3 sowohl ein Materialschluß über die Materialverbindungen 17, als auch ein Formschluß über die in den Schnapp- oder Rastelementen 13 festgeklemmten Befestigungsabschnitte 16 besteht. Erst dann wird die CD in die Verpackung eingesetzt und anschließend die Abdeckung 2 an den hierfür vorgesehenen Klebstellen mit dem noch einstückigen Spritzgießteil verklebt. Von diesem Zeitpunkt an läßt sich die CD nur noch aus der Verpackung herausnehmen, indem zunächst das Verschlußteil 3 von dem Plattenhalter 1 gelöst wird. Beim ersten Mal ist dies nur nach vorheriger Zerstörung der Materialverbindungen 17 möglich, so daß eine einfache aber wirksame Versiegelung vor der erstmaligen Benutzung der CD erreicht wird.

Die Materialverbindungen 17 sind derart gestaltet, daß diese ein einmaliges Verschwenken nach Art eines Scharniers zulassen, bei einem anschließenden Rückverschwenken hingegen infolge von Materialermüdung brechen.

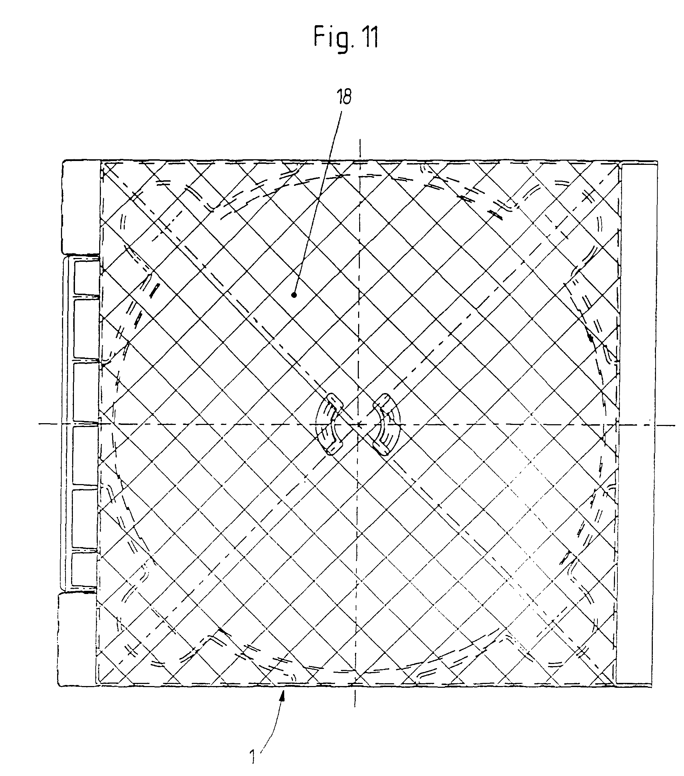

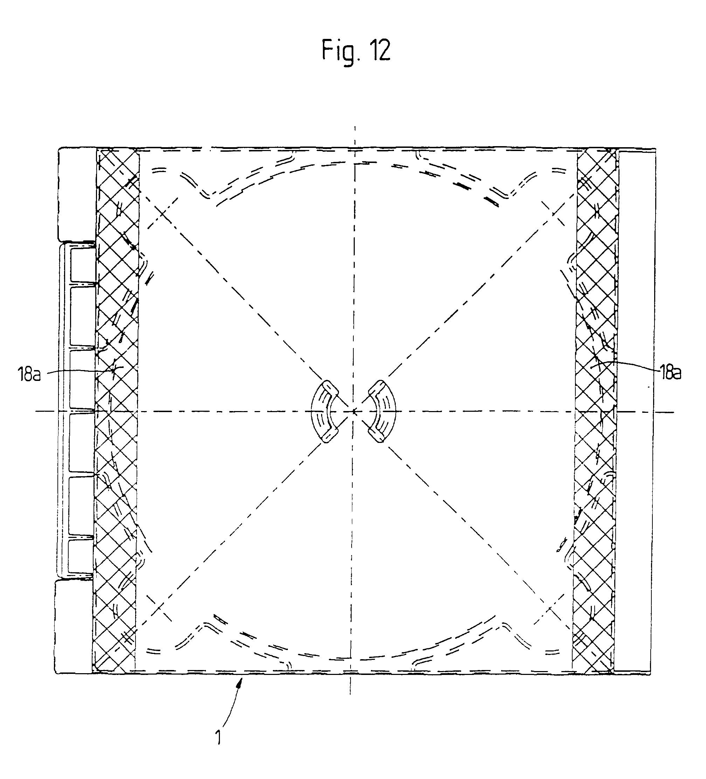

Der Plattenhalter 1 ist mit der im geschlossenen Verpackungszustand ihn umhü!lenden Abdeckung 2 aus einem einzigen Blatt Papier, Pappe oder Folie verklebt. Als Klebeflächen eignen sich hierzu die in den Figuren 11 bis 13 dargestellten, doppelschraffierten Bereiche. Dabei kann als untere Klebefläche 18 entweder die komplette plane Unterseite des Plattenhalters 1 (siehe Figur 11) verwendet werden oder alternativ nur zwei schmale Abschnitte 18a, die entlang den äußeren Kanten des Plattenhalters 1 verlaufen (siehe Fig. 12). Letztgenannte Alternative bietet zudem den Vorteil, daß bei Verwendung eines aus glasklarem Kunststoff gefertigten Plattenhalters eine zusätzliche, bei herausgenommener CD sichtbar werdende Werbe- oder Informationsfläche 20 an der Unterseite der Verpackung entsteht (vgl. Fig. 1).

Die Klebeflächen 19 und 15 auf der Oberseite des Plattenhalters 1 werden durch die streifenförmige Fläche 12 und die, wie bereits erwähnt, plane Oberseite des umgelegten Verschlußteils 3 gebildet (siehe Fig. 13). Die Verklebung erfolgt bei bereits bestückter Informationsplatte und bei umgelegtem, aber noch in Materialverbindung zu dem Plattenhalter 1 stehenden Verschlußteil 3, so daß erst nach dem Brechen der Sollbruchstellen 17 infolge eines von dem Benutzer durchgeführten Biegens des Verschlußteils 3 relativ zum Plattenhalter 1 die Verpackung erstmalig geöffnet werden kann, um die CD zu entnehmen. Damit ist zugleich ein der Herstellung immanenter, kostengünstiger Versiegelungsschutz der Informationsplatte gegeben. Um die CD zusätzlich vor einem Herausfallen aus dem Plattenhalter 1 zu schützen, kann die Abdeckung 2 auf der Vorderseite des Plattenhalters jeweils bis an den Außendurchmesser der CD angeklebt werden.

Vor dem Verkleben der Abdeckung 2 mit dem Plattenhalter 1 kann noch eine flache Druckschrift zwischen der CD und der Unterseite der Abdeckung 2 eingelegt werden. Die Druckschrift kann auch fest mit der Unterseite der Abdeckung 2 verbunden sein, zumal sie ebenfalls aus Papier besteht.

### Bezugszeichenliste

- 1: Plattenhalter
- 2: Abdeckung
- 3: Verschlußteil
- 4: Einsenkung
- 5: Halteelemente
- 6: Schlitz
- 6a: radial verlaufender Abschnitt
- 6b: Hinterschnitt
- 6c: Steg
- 7: Stützrippen
- 8: Versteifungsrippe
- 9: Ausbuchtungen
- 10: Grifflöcher
- 11: hochstehender Abschlußrand
- 12: streifenförmige Fläche
- 13: Schnapp- oder Rastelemente
- 14: Griffelemente
- 14a: Unterseite des Verschlußteils
- 15: Klebfläche des Verschlußteils
- 16: Befestigungsabschnitte
- 17: punktförmige Materialverbindung, Sollbruchstelle
- 18: untere Klebefläche des Plattenhalters
- 18a: alternative untere Klebfläche
- 19: obere Klebefläche des Plattenhalters
- 20: Werbefläche

## Patentansprüche

1. Verpackung zur Aufnahme einer scheibenförmigen Informationsplatte, insbesondere einer Compact Disc, mit
a) einem aus einem Kunststoff-Spritzteil bestehenden Plattenhalter (1), der mit einer Einsenkung (4) versehen ist, in die sich die Informationsplatte von oben her einsetzen läßt,
b) an dem Plattenhalter (1) angeformten Halteelementen (5) für die in die Einsenkung (4) eingesetzte Informationsplatte und
c) einer im wesentlichen rechteckigen Abdeckung (2) für den Plattenhalter (1), die entlang eines ihrer Ränder an dem Plattenhalter (1) befestigt ist, während der gegenüberliegende freie Rand der Abdeckung (2) mittels eines Verschlussteils (3) lösbar an dem Plattenhalter (1) festlegbar ist,
**dadurch gekennzeichnet, daß** das Verschlussteil
ein flaches, langgestreckt geformtes Verschlussteil ist (3), dessen plane Oberseite (15) fest mit dem freien Rand der Abdeckung (2) verbunden ist und das Befestigungsabschnitte (16) aufweist, die zum lösbaren Festlegen des Verschlussteils (3) an dem Plattenhalter (1) in nach oben geöffnete, hakenförmige Schnapp- oder Rastelemente (13) am Rand des Plattenhalters (1) klemmend eingreifen.

2. Verpackung nach Anspruch 1, **dadurch gekennzeichnet, dass** das Verschlussteil (3) ein Kunststoffstreifen ist, der auf seiner gesamten Länge mit dem freien Rand der Abdeckung (2) verbunden ist.

3. Verpackung nach Anspruch 1 oder 2, **dadurch gekennzeichnet, dass** das Verschlussteil (3) einen mittleren Abschnitt aufweist, zu dessen beiden Enden hin sich die Befestigungsabschnitte (16) anschließen und der auf seiner Unterseite (14a) mit das Verschlussteil (3) zugleich verstrebenden Griffelementen (14) versehen ist.

4. Verpackung nach einem der Ansprüche 1 bis 3, **dadurch gekennzeichnet, dass** die Abdeckung (2) aus Papier, Pappe oder einer flexiblen Kunststoffolie besteht.

5. Verpackung nach einem der Ansprüche 1 bis 4, **dadurch gekennzeichnet, dass** das Verschlussteil (3) mit der Abdeckung (2) verklebt ist.

6. Verpackung nach Anspruch 5, **dadurch gekennzeichnet, dass** die Abdeckung (2) mit der Unterseite des Plattenhalters (1) und zusätzlich mit einer nach oben weisenden und sich entlang des Randes erstreckenden, streifenförmigen Fläche (12) des Plattenhalters (1), die vorzugsweise nach außen hin schräg abfällt, verklebt ist.

7. Verpackung nach einem der Ansprüche 1 bis 6, **dadurch gekennzeichnet, dass** deren zwischen Oberseite und Unterseite des Plattenhalters (1) gemessene Dicke 2 mm bis 4 mm beträgt.

8. Verpackung nach einem der Ansprüche 1 bis 7, **dadurch gekennzeichnet, dass** Plattenhalter (1) und Verschlussteil (3) als Bestandteile ein- und desselben Kunststoff-Spritzteiles bis zum erstmaligen öffnen der Verpackung über mindestens eine Sollbruchstelle (17) in Materialverbindung stehen.

9. Verpackung nach Anspruch 8, **gekennzeichnet durch** mehrere in einer Reihe angeordnete, punktförmige Materialverbindungen (17) als Sollbruchstellen.

10. Verpackung nach Anspruch 8 oder 9, **dadurch gekennzeichnet, dass** sich die Sollbruchstellen (17) nur über den mittleren Abschnitt des Verschlussteiles (3) erstrecken.

11. Verpackung nach einem der Ansprüche 8 bis 10, **dadurch gekennzeichnet, dass** Plattenhalter (1) und Verschlussteil (3) bis zum Zeitpunkt des gewollten Brechens der Sollbruchstelle (17) zugleich über die Sollbruchstelle (17) in Materialverbindung, wie auch über die Schnapp- oder Rastelemente (13) in form- und kraftschlüssiger Verbindung stehen.

12. Verpackung nach Anspruch 11, **gekennzeichnet durch** ein Brechen der Sollbruchstelle (17) **durch** Biegen des Verschlussteiles (3) relativ zum Plattenhalter (1).

13. Verpackung nach einem der Ansprüche 1 bis 12, **dadurch gekennzeichnet, dass** die Unterseite des Plattenhalters (1) eine plane, ebene Fläche ist.

14. Verpackung nach Anspruch 13, **dadurch gekennzeichnet, dass** sich an der Unterseite des Plattenhalters (1) seitliche Führungsfugen befinden.

## Claims

1. Packaging for accommodating an information disc, in particular a compact disc, having
a) a disc holder (1) which comprises a plastic injection moulding and is provided with a depression (4) into which the information disc can be inserted from above,
b) retaining elements (5) which are integrally formed on the disc holder (1) and are intended for the information disc inserted into the depression (4), and
c) an essentially rectangular covering (2) which is intended for the disc holder (1) and, along one of its borders, is fastened on the disc holder (1), while the opposite, free border of the cover (2) can be secured releasably on the disc holder (1) by means of a closure part (3),
**characterized in that** the closure part is a flat, elongate closure part (3), of which the planar top side (15) is fixed to the free border of the cover (2) and which has fastening sections (16) which, for releasably securing the closure part (3) on the disc holder (1), engage with clamping action in hook-shaped snap-in or latching elements (13) which are open in the upward direction on the border of the disc holder (1).

2. Packaging according to Claim 1, **characterized in that** the closure part (3) is a plastic strip which is connected over its entire length to the free border of the covering (2).

3. Packaging according to Claim 1 or 2, **characterized in that** the closure part (3) has a central section, the fastening sections (16) adjoining in the directions of the two ends of said central section and the latter being provided, on its underside (14a), with grip elements (14) which, at the same time, reinforce the closure part (3).

4. Packaging according to one of Claims 2 to 3, **characterized in that** the covering (2) consists of paper, paperboard, or a flexible plastic sheet material.

5. Packaging according to one of Claims 1 to 4, **characterized in that** the closure part (3) is adhesively bonded to the covering (2).

6. Packaging according to Claim 5, **characterized in that** the covering (2) is adhesively bonded to the underside of the disc holder (1) and, in addition, to an upwardly oriented strip-like surface (12) which extends along the border of the disc holder (1) and preferably slopes down obliquely in the outward direction.

7. Packaging according to one of Claims 1 to 6, **characterized in that** the thickness of the packaging measured between the top side and underside of the disc holder (1) is from 2 mm to 4 mm.

8. Packaging according to one of Claims 1 to 7, **characterized in that** the disc holder (1) and closure part (3), as constituent parts of one and the same plastic injection moulding, are integrally connected via at least one predetermined breaking point (17) until the packaging is opened for the first time.

9. Packaging according to Claim 8, **characterized by** a plurality of punctiform integral connections (17) arranged in a row as predetermined breaking points.

10. Packaging according to Claim 8 or 9, **characterized in that** the predetermined breaking points (17) only extend over the central section of the closure part (3).

11. Packaging according to one of Claims 8 to 10, **characterized in that**, up until the point in time at which the predetermined breaking point (17) is broken as desired, the disc holder (1) and closure part (3) are both integrally connected via the predetermined breaking point (17) and connected with a form fit and force fit via the snap-in or latching elements (13).

12. Packaging according to Claim 11, **characterized by** the predetermined breaking point (17) being broken by the closure part (3) being bent relative to the disc holder (1).

13. Packaging according to one of Claims 1 to 12, **characterized in that** the underside of the disc holder (1) is a planar surface.

14. Packaging according to Claim 13, **characterized in that** lateral guide joints are located on the underside of the disc holder (1).

## Revendications

1. Emballage contenant un support d'information en forme de disque, en particulier un Compact Disc, avec
a) un support de disque (1) constitué d'une pièce en matière plastique, moulée par injection, muni d'un renfoncement (4), destiné à insérer le support d'information par le dessus,
b) des éléments de maintien (5) pour le disque inséré dans le renfoncement, qui sont moulés sur le support de disque (5),
c) un couvercle (2) sensiblement rectangulaire pour le support de disque (1), qui est fixé sur le support de disque (1) le long de l'un de ses bords, alors que le bord libre opposé du couvercle (2) peut être fixé de manière amovible sur le support de disque (1), à l'aide d'une pièce de fermeture (3),
**caractérisé en ce que** la pièce de fermeture est une pièce de fermeture (3) moulée en longueur, dont la face supérieure (15) plane est reliée avec le bord libre du couvercle (2) et qui présente des segments de fixation (16), qui pour la fixation amovible de la pièce de fermeture (3) sur le support de disque (1), s'introduisent par blocage dans des éléments à cliquets ou à encoches (13) en forme de crochets ouverts vers le haut, sur le bord du support de disque (1).

2. Emballage selon la revendication 1, **caractérisé en ce que** la pièce de fermeture (3) est une bande en matière plastique, qui est reliée sur toute sa longueur avec le bord libre du couvercle (2).

3. Emballage selon l'une quelconque des revendications 1 ou 2, **caractérisé en ce que** la pièce de fermeture (3) présente un segment médian, sur les deux extrémités duquel viennent se raccorder les segments de fixation (16) et qui est muni sur sa face inférieure (14a) d'éléments de manipulation (14) qui rigidifient également la pièce de fermeture.

4. Emballage selon l'une quelconque des revendications 1 à 3, **caractérisé en ce que** le couvercle (2) est constitué de papier, de carton, ou d'un film en matière plastique flexible.

5. Emballage selon l'une quelconque des revendications 1 à 4, **caractérisé en ce que** la pièce de fermeture (3) est collée avec le couvercle (2).

6. Emballage selon la revendication 5, **caractérisé en ce que** le couvercle (2) est collé sur la face inférieure du support de disque (1) et également avec une surface en forme de bande (12) du support de disque (1), tournée vers le haut et s'étendant le long du bord et de préférence inclinée vers l'extérieur.

7. Emballage selon l'une quelconque des revendications 1 à 6, **caractérisé en ce que** son épaisseur mesurée entre la face supérieure et la face inférieure du support de disque (1) est de 2 mm à 4 mm.

8. Emballage selon l'une quelconque des revendications 1 à 7, **caractérisé en ce que** le support de disque (1) et la pièce de fermeture (3), en tant qu'éléments d'une seule et même pièce en matière plastique moulée par injection, sont reliés par de la matière, par l'intermédiaire d'au moins une zone de rupture théorique (17), jusqu'à la première ouverture de l'emballage.

9. Emballage selon la revendication 8, **caractérisé par** plusieurs liaisons par matière (17) en forme de points, alignées sur une rangée et faisant office de zone de rupture théorique.

10. Emballage selon l'une quelconque des revendications 8 ou 9, **caractérisé en ce que** les zones de rupture théoriques (17) s'étendent uniquement sur le segment médian de la pièce de fermeture (3).

11. Emballage selon l'une quelconque des revendications 8 à 10, **caractérisé en ce que**, jusqu'au moment de la cassure volontaire de la zone de rupture théorique, le support de disque (1) et la pièce de fermeture (3) sont simultanément reliés par moulage et par engagement positif, d'une part par matière, par l'intermédiaire de la zone de rupture théorique (17) et d'autre part par les éléments à cliquets ou à encoches (13).

12. Emballage selon la revendication 11, **caractérisé par** une cassure de la zone de rupture théorique (17), par torsion de la pièce de fermeture (3), relativement au support de disque (1).

13. Emballage selon l'une quelconque des revendications 1 à 12, **caractérisé en ce que** la face inférieure du support de disque (1) est une surface plane et lisse.

14. Emballage selon la revendication 13, **caractérisé en ce que** des entailles de guidage latérales sont situées sur la face inférieure du support de disque (1).
